# EUROPEAN PATENT SPECIFICATION

(11) **EP 2 247 633 B1**
(45) Date of publication and mention of the grant of the patent: **28.09.2016**
(21) Application number: 09712458.0
(22) Date of filing: 16.02.2009
(51) Int. Cl.: C08G 18/48, C08G 18/66, C08G 18/76, C08F 290/14, C08G 18/08, C08G 18/12

(54) **AQUEOUS POLYURETHANE HYBRID COMPOSITIONS**
WÄSSRIGE HYBRIDE POLYURETHANZUSAMMENSETZUNGEN
COMPOSITIONS HYBRIDES DE POLYURÉTHANNE AQUEUSES

(30) Priority: 19.02.2008 US 29631 P
(43) Date of publication of application: 10.11.2010
(73) Proprietor: Lubrizol Advanced Materials, Inc., Cleveland, OH 44141-3247 (US)
(72) Inventor: PAJERSKI, Anthony, D., Broadview Heights Ohio 44147 (US); LERNER, Svetlana, N., Solon Ohio 44139 (US)
(74) Representative: dompatent von Kreisler Selting Werner - Partnerschaft von Patent- und Rechtsanwälten mbB
(86) International application number: PCT/US2009/034183
(87) International publication number: WO 2009/105396

(56) References cited:
- WO-A-2006/002864
- WO-A-2006/002865
- WO-A-2006/086322
- US-A- 5 571 861
- US-A- 5 623 016

## Description

### FIELD OF THE INVENTION

The present invention relates to the preparation of waterborne aromatic polyurethane dispersion compositions and in particular those free of or having low n-methyl-pyrrolidone (NMP) content. In particular, the main compositions of interest are what are referred to as urethane-acrylic or vinyl-urethane hybrid or composite dispersions and contain mainly or exclusively aromatic polyisocyanate as the isocyanate reactive component.

### BACKGROUND OF THE INVENTION

Polyurethanes in general have gained a strong reputation for their excellent durability and resistance properties that have led to applications in many higher performance areas. An example of which includes wood substrates and in particular wood flooring where high durability and resistance properties are required. Conventional polyurethane dispersions typically use a significant amount of N-methyl, pyrrolidone (NMP) as a diluent to control processing viscosity during the organic phase "prepolymer," reaction stage. However, increasing regulatory pressure to both reduce volatile organic content (VOC) of coatings and reduce or eliminate NMP due to toxicity concerns have focused the need for new commercial polyurethane compositions and processes which avoid the use of NMP.

It is also recognized that polyurethanes prepared from predominately aromatic polyisocyanates have better hardness, improved chemical resistance, enhanced mechanical properties as well as being significantly more cost effective than those based on the use of aliphatic polyurethanes. Furthermore, it is recognized that urethane-acrylic polyurethane dispersions can provide properties similar to pure polyurethanes but at significant reduced cost while also being NMP free.

However, the disadvantage resulting from preparation of waterborne polyurethanes based on aromatic polyisocyanates with very low levels or no NMP is that the process usually results in waterborne polyurethanes with high content of colloidally unstable material, sediment and/or gel formation.

U.S. Patent No. 4,198,330 discloses the modification of polyurethane dispersions by polymerization of acrylic monomers in the presence of the waterborne polyurethane particle.

U.S. Patent No. 3,705,164 teaches the use of acetone as a diluent in the prepolymer to prepare aromatic polyurethane dispersions free of NMP that are further modified with a polyacrylic polymer.

U.S. Patent No. 5,662,966 teaches the preparation of aromatic polyurethanes that are NMP free using acetone in the prepolymer using dimethylol butanoic acid as a dispersing diol agent.

U.S. Patent No. 5,637,639 discloses NMP free polyurethane compositions that use low amounts of acetone as a diluent in the prepolymer.

U.S. Patent No. 4,655,030 discloses the preparation of aliphatic polyurethane-acrylic dispersions via a process that renders them free of NMP.

U.S. Patent No. 5,137,961 discloses the preparation of surfactant free and solvent free polyurethane-acrylic dispersions.

U.S. Patent No. 4,927,876 discloses the preparation of waterborne polyurethane and urethane-acrylic compositions containing diphenylmethane diisocyanate and using NMP as a diluent in the prepolymer.

U.S. Patent No. 6,239,209 teaches the preparation of oxidatively curable aromatic polyurethane-acrylics using NMP as a diluent in the prepolymer.

WO2006/002864 and WO2006/002865 disclose NMP free aromatic polyurethane and urethane-acrylic compositions that use methyl ethyl ketone as a diluent in the prepolymer.

WO2006/086322 relates to polyurethane aqueous dispersions comprising polyketone oligomers of molecular weight <2000 and hydrazine compounds co-reactive with said ketone also of molecular weight <2000.

### SUMMARY OF THE INTENTION

Waterborne aromatic polyurethane-acrylic dispersions are formed that are low or preferably absent of N-methyl-pyrrolidone and similar solvents. These dispersions are very clean (low in colloidally unstable particles or material often termed sediment or grit). They are generally obtained by the reaction of an isocyanate terminated prepolymer formed from a reaction of components comprising a) 20-60% of a least one aromatic polyisocyanate; b) 10-90% of vinyl monomer added at any time to the prepolymer; c) 20-60% of at least one isocyanate reactive polyol not bearing ionizable groups with a MW >500g/mol on average; d) 0-12% of a diol, polyol or polyols or combinations thereof bearing active hydrogen groups as and containing a ionizable or potentially ionizable water dispersing group solubilized in either b) or c) or a combination thereof. Examples of ionizable or potentially ionizable water dispersing groups that benefit from solubilizing in b) or c) include dimethylol butanoic acid and dimethylol propanoic acid. In one embodiment, the composition further comprises about 2-20 % of a ethylene glycol monoalkyl ether or propylene glycol monoalkyl ether based on the weight of prepolymer being dispersed in the water phase. In one embodiments, said vinyl monomer is polymerized at any time into a vinyl polymer such that the hybrid of poly(vinyl monomer) with polyurethane is formed. In one embodiment, the polyurethane or dispersion further comprises a polyketone oligomer, e.g., derived from reaction a carbonyl containing organic acid with an epoxy containing or epoxy functionalized natural oil.

### DETAILED DESCRIPTION OF THE INVENTION

The present invention relates to the waterborne aromatic polyurethane-acrylic dispersion as defined in claim 1. Preferred embodiments of the invention are apparent from the dependent claims.

All of the above disclosures have a deficiency that is resolved by the present invention. Although some of the disclosures demonstrate how to prepare NMP (N-methyl-pyrrolidone, also called 1-methyl-2-pyrrolidone) free urethane or urethane-acrylic dispersions, they are typically aliphatic polyurethanes or use a highly volatile diluent in the prepolymer stage that needs to be removed or use low amounts of aromatic polyisocyanates which does not contain diphenylmethane diisocyanate. The use of highly volatile compounds to aid processing of the waterborne polyurethane prepolymer besides imparting a flammable hazard to the process and/or product can also impart an additional cost to the final product if it needs to be removed and results in a less efficient process.

NMP has provided numerous benefits to urethane dispersion producers/manufacturers and formulators over the years. The NMP first is a good solvent to facilitate the blending of the components to the urethane prepolymer and allow the urethane forming reactions to proceed to near 100% completion in a low viscosity medium. The NMP also reduces the viscosity of the prepolymer during the stage where the prepolymer is formed and allows it to form small emulsion droplets when it is dispersed in water. The NMP had good compatibility with both the water phase and the prepolymer phase and reduces the surface tension at the interface between the prepolymer and the water. This was important as huge amounts of interfacial regions had to be created in fractions of a second and lowering the interfacial tension helped to form small discrete particles. In the urethane dispersions, the NMP did not contribute significantly to flammability as it had fairly low vapor pressure at room temperature. Finally, in making an adhesive or coating, the NMP promoted interaction at any surfaces (facilitating good bonding to surfaces and good film formation as the particles of polyurethane coalesced into a film). As NMP had lower vapor pressure than water, the water from the dispersion evaporated first and the NMP was still available to help with initial.adhesion and film formation.

In one embodiment of this invention, it is desired to make an NMP free polyurethane-vinyl hybrid or a low NMP polyurethane-vinyl hybrid dispersion. For the purpose of this application, an NMP free hybrid will be less than 0.1 wit.% NMP based on the weight of the polyurethane. According to the invention, the low NMP polyurethane-vinyl dispersion will be less than 5 wt.% NMP, more desirably less than 3 wt.%, preferably less than 1 wt.% and more preferably less than 0.5 wt.% NMP based on the weight of the polyurethane. In another embodiment, the function(s) or the NMP are not replaced by an organic solvent with a boiling point at one atmosphere pressure of less than 100°C. Such solvents include acetone and methyl ethyl ketone (MEK).

In one embodiment, it is desirable to decrease the interfacial tension at the interface between the urethane prepolymer and the water during the dispersion of the prepolymer. The decrease in the interfacial surface tension will facilitate the formation of smaller particles of the prepolymer in Water, which under the right conditions will enhance colloidal stability. A group of ethylene glycol (or ethylene oxide) or propylene glycol (or propylene oxide) containing oligomers has been identified that help reduce this interfacial tension. These include mono, di, tri and tetraethylene glycols and/or mono, di, tri, and tetrapropylene glycols with one terminus functionalized with a C1 to C6 alkyl group, in another embodiment C1 to C4, and in another embodiment methyl or ethyl. These include diethylene glycol mono-n-butyl ether (butyl carbitol) (as shown in Example 1, 4, 7, and 8) and other alkyl ethers of diethylene glycol and/or dipropylene glycol mono-n-butyl ether (as shown in Example 2). These molecules may be present from 1 or 2 to 20 % by weight based on the weight of the prepolymer component (approximately equal to the final weight of the polyurethane component). In one embodiment, they may be present from 2 or 3 to 15 % by weight, and in a third embodiment from 2 or 3 to 10 % by weight. The interfacial tension modifiers do not include traditional ionic surfactants such as sodium lauryl sulfate (Comparative Example 5) and differ from these traditional types in that they also act as film formers and eventually volatilizes from the film. This reduces any negative effects associated with water sensitive surfactants. Moreover, as film formers, they do not have the associated toxicological issues inherent to NMP. The interfacial tension modifiers do not include traditional nonionic surfactants like nonphenol ethoxylates and EO-PO copolymers. In one embodiment, these excluded materials have number average molecular weights above 500, in another embodiment above 400 and in a third embodiment above 300 Daltons/mole.

### Definitions

In this document, "polyurethane" is a generic term used to describe urethane polymers including oligomers (e.g., prepolymers) which contain multiple urethane groups, i.e., -O-C(=O)-NH-, regardless of how they are made. As well known, polyurethanes can contain additional groups such as urea, allophanate, biuret, carbodiimide, oxazolidinyl, isocynaurate, uretdione, ether, ester, carbonate, etc., in addition to urethane groups. Typically, the prepolymers will be from about 1,000 to about 3,000 Daltons in number average molecular weight and if chain extended during the processing can reach number average molecular weights in the millions of Daltons.

"Wt. %" means the number of parts by weight of monomer per 100 parts by weight of polymer, or in the case of a polymer and additives blend the number of parts by weight of ingredient per 100 parts by weight of composition or material of which the ingredient forms a part.

"Aqueous medium" means a composition containing a substantial amount of water. It may contain other ingredients as well.

The "final polyurethane product" refers to the polyurethane in the aqueous dispersion product of this invention. When the polyurethane prepolymer is chain extended, the final polyurethane product is this chain extended polymer. When the polyurethane prepolymer is not chain extended, the final polyurethane product is the prepolymer itself, which if not capped and if it contains isocyanate end groups will undergo reaction with water leading to chain growth.

"substantial absence of surfactant" as well as "substantially free of residual surfactant" in reference to a dispersion means that the dispersion is made without intentionally including a surfactant (a possibility in some embodiments but not required in all embodiments) for suspending or dispersing the dispersed phase of the dispersion. Surfactant in this context refers to molecules whose primary function is to stabilize particles or go to interfaces between phases and modify the interfacial tension at those interfaces. The term surfactant does not include water dispersability enhancing compounds that are chemically reacted into a polyurethane or urethane prepolymer.

The ketone functional molecule and hydrazine functional moiety can promote inter particle penetration and coalescence during particle coagulation of the polyurethane dispersion during film formation. Desirably, the ketone functional molecule and the hydrazine functional moiety react to form azomethine linkages upon evaporation of the water phase as taught in U.S. Patents 4,210,565 and 4,983,662.

### Ketone Functional Molecules/Oligomers (Moieties)

The ketone functional moieties/molecule and hydrazine functional moieties of this disclosure do not need to be attached to the primary polymer chains (e.g., urethane or possibly acrylic polymer in a hybrid system) and may chain extend and/or crosslink lower molecular weight species rather than crosslinking polymer chains (as disclosed in the prior art) in order to improve the properties of a polyurethane composition. According to the present invention the polyketone oligomer is the reaction product of an epoxidized vegetable oil (for example, epoxidized soybean oil or linseed oil) and levulinic and/or pyruvic acid.

The reaction between the levulinic acid/pyruvic acid and the epoxidized vegetable oil is desirably catalyzed to reduce the reaction time and reaction temperature. Catalysts include trialkylamines (including 1,4-diazabicyclo[2.2.2]octane, DABCO), phosphines such as triphenylphosphine, chromium3+ catalysts, imidiazoles, such as N-methylimidaxole, etc. Levulinic acid is also calied γ-ketovaleric acid; acetylpropionic acid or 4-oxopentanoic acid and pyruvic acid is also called α-ketopropionic acid or acetylformic acid.

The triglyceride oils are unsaturated vegetable oils, which are generally considered to be derived from condensation reactions of various fatty acids and glycerol. While the triglycerides are often described as oils, they may be solids at room temperature. The higher the amount of unsaturation present, the higher the degree of epoxidation possible under similar reaction conditions. Reactions of these oils with unsaturation with strong oxidizers can convert the carbon to carbon double bond in the fatty acids to epoxides; peracetic acid being a common strong oxidizer for this purpose. Epoxidized vegetable oils are commercially available from companies such as Dow and Chemtura. The oxirane oxygen content is generally characterized from 7-10 or 12 % by weight. The oxirane oxygen value is determined by a nonaqueous potentiometric titrimetry using perchloric acid in the presence of tetraethylammonium bromide. Epoxidized soybean and linseed oils are both commercially available, often used as plasticizers, and sometimes are used as acid scavengers.

The ketone or aldehyde functional groups are generally not blocked (e.g., temporarily reacted with a removable chemical moiety to avoid premature reaction), although in some embodiments it might be desirable to block some ketone or aldehyde functional groups for specific requirements.

In an earlier application, PCT/US06/004148 filed February 7, 2006, a preferred ketone functional molecule refers to a low molecular weight mono or poly ketone or mono or poly aldehyde (excluding formaldehyde) reactant generally below 2000 Dalton number average molecular weight. These can be low molecular weight ketones and aldehydes, or they can be reaction products of low molecular weight ketones and aldehydes with other reactants (e.g., reacted with epoxy compounds, polyols, amines, isocyanates, etc., to build molecular weight or couple multiple ketones or aldehydes together). The chemistry to couple low molecular weight ketones and aldehydes is well known. Three viable alternatives include a) polymerizing ketone or aldehyde containing unsaturated monomers (optionally with other unsaturated monomers present), b) making higher molecular weight species by condensation reactions, or c) reactions of vinyl groups with amines (Michael addition reaction). The polymerization reaction mechanism and monomers are further set forth in U.S. Patent 4,983,662 in column 13, line 59 through column 15, line 10. The condensation reaction mechanism to create higher molecular ketone or aldehyde moiety(ies) would include starting with low molecular weight ketones or aldehydes such as a) dihydroxyacetone reacted with a mono or polyisocyanate, b) react levulinic acid with diol or polyol and condense to form hydroxyl functional ketone optionally coupled with di or polyisocyanate, or c) levulinic acid (4-oxopentanoic acid) reacted with diglycidyl or polyglycidyl ether. A Michael addition reaction product is shown in U.S. Patent 4,983,662 Example 2 where diethanolamine, diacetoneacrylamide are reacted in NMP to form a carbonyl-functional diol. Formaldehyde is not included in the ketone and/or aldehyde reactants because reactions between the hydrazine and formaldehyde are different than those of other aldehydes and ketones and desirably in some embodiments the aqueous dispersion of polyurethane is free of reaction products of formaldehyde and hydrazine.

In an earlier publication (WO2006/047746) crosslinkable carbonyl functional groups were incorporated into a urethane polymer backbone (page 32, under optional crosslinkable functionality). In an earlier application, PCT/US06/004148 filed February 7,2006, an epoxy resin such as a diglycidyl ether terminated resin is reacted with a carboxylic acid such as levulinic acid. In the examples of epoxy resins, the polyhydric alcohol can be selected from polyhydric phenols, aliphatic diols, cycloaliphatic diols, polyether polyols, aliphatic dicarboxylic acids, and the like obtained by reacting the polyhydric alcohol with an epihalohydrin, e.g., epichlorohydrin. In this embodiment, it mentioned that the resulting product had hydroxyl groups formed from the ring-opening of the oxirane moiety. These hydroxyl groups contain active hydrogen atoms and are co-reactive with the isocyanate groups contained in the polyisocyanate compound during the prepolymer formation and allow the pendant ketone to be polymerized into the prepolymer backbone. The polyhydric alcohols were described as phenols, including but not limited to bisphenol A (p,p'-dihydroxydiphenyl propane), resorcinol, hydroquinone, 4,4'-dihydroxybenzophenone, 4,4'-dihydroxybiphenyl and novolak resins containing more than two phenol moieties linked through methylene bridges.

Where the compositions of the invention incorporate non-polyurethanic non-vinylic polycarbonyl compound(s) and/or oligomeric urethane polycarbonyl compounds, the level of such polycarbonyl compound(s) is desirably that to provide a range of 0.05 to 20 moles carbonyl groups per mole of hydrazine (or hydrazone) groups present, in another embodiment from 0.1 to 10 moles per mole; and in another embodiment from about 0.8 or 0.9 to 1.25 or 1.5 moles per mole. Examples of suitable polycarbonyl compounds are di-or poly-ketones, di-or poly-aldehydes, and aldehyde-ketones such as glyoxal, 2,5-hexanedione, glutaric dialdehyde, succinic dialdehyde, acetyl acetone, acetonyl acetone, and acetone dicarboxylic acid ester.

The proportion of carbonyl functional groups in the free radically polymerized polymer (if such is present) is preferably 3 to 200 milliequivalents per 100 g polymer (more preferably 6 to 100 milliequivalents per 100 g polymer).

A particular chain pendant ketone functional group beyond that disclosed in U.S. Patent 4,983,662 is disclosed that avoids having pH shifting basic nitrogen groups near the active carbonyl ketone group. In U.S. Patent 4,982,662, Examples 2, 4, 8, 9, and 10, the authors used a reaction product of diethanolamine and diacetoneacrylamide that resulted in a basic nitrogen (e.g., where the nitrogen was only attached to adjacent atoms selected from aliphatic carbon and hydrogen and was not attached to a carboxyl group) being within 6 atoms of the ketone carbonyl group. As the ketone hydrazide reaction is pH sensitive (hindered by pH above 7 and accelerated below pH 7), it is believed that identifying chain pendant carbonyl groups (e.g., ketone or aldehyde) that either do not have basic nitrogen in the molecule or at least have the basic nitrogen separated by more than 7 atoms from the active carbonyl is desirable or possibly exclude basic nitrogen atoms in the molecule if non-polymeric or exclude basic nitrogen atoms in the lateral side chain if polymeric. The term chain pendant is used as the U.S. Patent 4,982,662 reference and the reference did use dihydroxyacetone in Example 1 (which did not have a basic nitrogen nearby but has the functionality in the polymer chain or backbone). Note that for the purposes of this application, nitrogen atoms attached to carbonyl groups are not considered to be undesirable basic nitrogen atoms as they have less influence on pH than the nitrogen of amines such as in the reaction of diethanolamine with diacetoneacrylamide (resulting in a trialkylamine or tertiary amine), which is easily protonated (or ionized). The Example 1 in U.S. Patent 4,982,662 using dihydroxyacetone resulted in the carbon of the carbonyl group being part of the urethane polymer backbone (where it had less mobility to relocate to react with a hydrazine moiety). A chain pendant ketone functionality for the purpose of this application will be defined as a ketone functional group attached as a non-pulymeric molecule or as lateral segment to a polymer backbone and where the reactive ketone group is between 1 to 5 or 10 atoms from the end of the polymer/molecule rather than being in the polymer backbone or very near to the polymer backbone. Ketone groups so positioned have more mobility to position themselves sterically to react with hydrazine moieties.

### Hydrazine Functional Molecules/Oligomers (Moieties)

The preferred hydrazine functional moiety refers to a low molecular weight molecule or oligomers having one or more hydrazine or hydrazone groups. By a hydrazine functional group is meant the functional group of formula --NHNH₂. A hydrazone functional group is a group derived from such a hydrazine group by reaction with a monoketone or monaldehyde containing at least 2 carbon atoms. Hydrazine functional moieties can also be dihydrazides and other polyhydrazides as expressed below in that these molecules have the specified --NHNH₂ group.

While hydrazine itself (H₂N-NH₂) at elevated concentrations raises concerns about worker exposure, hydrazide (--NHNH₂) containing molecules are less of an exposure issue and offer the opportunity to build molecular weight and/or crosslink molecules/oligomers/polymers after polyurethane dispersion coagulation/film formation at or around room temperature. Volatile amines can play a significant role in the reactions using hydrazine functional moieties as the amines are/can be used in polyurethane dispersions to adjust the pH to the basic side before coalescence and allow the pH to shift to the acid side as the water and volatile amines evaporate. This pH shift and water evaporation promotes the reaction of hydrazine groups with available ketone or aldehyde groups (providing molecular weight buildup and or crosslinking).

The hydrazine functional moieties can be prepared from lower molecular weight hydrazine/hydrazide containing moieties or they can be prepared by reacting hydrazine (H₂N-NH₂) with mono or poly a) carboxylic acids, b) ketones, or c) aldehydes. Such a reaction would be the reaction of two moles of hydrazine with adipic acid to form the dihydrazide of adipic acid. U.S. Patent 4,983,662 sets forth in column 17, line 44, through column 18, line 42, other hydrazine functional moieties and their source or preparation technique. Examples of preparations and use of hydrazine functional moiety(ies) is set forth in Examples 3, 4, and 5 of the same patent.

Alternatively, the hydrazine functional moieties can be prepared from polymerizing vinyl containing monomers to form oligomers or polymers and then functionalizing said oligomers or polymers by reacting acid, ketone, or aldehyde groups with hydrazine. This is more fully set forth in U.S. Patent 4,983.662 in column 15, line 11, and column 16, line 49. Therein, it uses the term-pendant hydrazinolysable groups to describe groups that can pre or post polymerization be converted to hydrazine or hydrazone groups by reacting with hydrazine (H₂N-NH₂). In this application, the hydrazine functional moiety preferable includes at least one non-polymeric (i.e., less than 2000 Dalton, more preferably less than 1000 Dalton number average molecular weight) hydrazine functional moiety.

Polymeric hydrazine and/or ketone functional polymers may be present and may co-react with the non-polymeric reactants but the polymeric versions of the ketone and hydrazine functional moieties are not required.

Suitable groups for hydrazinolysis are e.g., acid, acid halide and (especially) ester groups. Examples of monomers providing chain-pendant hydrazinolysable groups include crotonic acid, alpha-chloracrylic acid and especially acrylic acid, and acid chlorides or esters thereof, and also methacrylic acid and acid chlorides or esters thereof. There are advantageously used acrylic acid esters of alcohols of low molecular weight, such as methyl, ethyl, propyl, isopropyl, n-butyl or secondary butyl esters. As further comonomers (not providing hydrazinolysable groups) which can be used to form hydrazine functional moieties there may be used, for example, vinyl halides such as vinyl chloride, vinyl fluoride or vinylidene chloride; vinyl-aryl-compounds such as styrene or substituted styrenes. There may also be used polymerizable olefines, such as isobutylene, butadiene or 2-chlorobutadiene, or heterocyclic compounds containing at least one vinyl group such as the various vinyl-pyridines.

When a hydrazone-containing vinyl polymer or oligomer is required, the hydrazine groups may be converted to hydrazone groups by reacting the hydrazine functional moiety with a saturated monoketone or monaldehyde containing at least two carbon atoms and preferably of boiling point 30 to 200°C. Examples of such compounds include, for example, aliphatic ketones or aldehydes, such as acetone, ethyl methyl ketone, diisopropyl ketone, etc.

A preferred hydrazine functional moiety in one embodiment refers to a low molecular weight molecule or oligomers having one or more hydrazine, hydrazide, or hydrazone groups. By a hydrazine functional group is meant the functional group of formula--NHNH₂. A hydrazone functional group is a group derived from such a hydrazine group by reaction with a monoketone or monaldehyde containing at least 2 carbon atoms. A typical hydrazide group might be formed by reacting a mono or polycarboxylic acid with hydrazine, or by reaction between an -NCO and hydrazine. Synthesis of hydrazine functional moiety(ies) will be discussed later.

### Polyurethane Prepolymer Ingredients

The polyurethane prepolymers of this invention are formed from at least one polyisocyanate, at least one active hydrogen-containing compound containing two or more active hydrogens (e.g. an isocyanate reactive polyol), and at least one ionic and/or non-ionic water-dispersability enhancing compound.

### (i) Polyisocyanate

Desirably, a large proportion of the polyisocyanates used to make the prepolymer and polyurethane of this disclosure are aromatic polyisocyanates. Expressed one way, desirable at least 20 to 65 part of at least one aromatic polyisocyanate is used, in one embodiment from 30 to 60 parts and in another embodiment from 35 to 55 parts of polyurethane. Expressed another way desirably at least 75 mole percent, in another embodiment at least 85 or 95 mole % and in a third embodiment at least 98 mole percent of the total polyisocyanates used to form the prepolymer and polyurethane are aromatic isocyanates. The aromatic polyisocyanates can have two or more isocyanate groups. They may include isomers or oligomers of polyisocyanates that help reduce crystallinity of the as received material so that it is liquid rather than a crystalline solid at room temperature. Examples of suitable aromatic polyisocyanates include 4,4'-diphenylmethylene diisocyanate, its 2,4' isomer, its 2,2' isomer, mixtures thereof, toluene diisocyanate including its 2,4 and 2,6 version, phenylene diisocyanate, polymethylene polyphenyl polyisocyanates, naphthalene diisocyanate, their oligomeric forms, mixtures thereof, and the like. Preferred aromatic polyisocyanates are toluene diisocyanate and diphenylmethylene diisocyanate.

Suitable polyisocyanates in general have an average of about two or more isocyanate groups, preferably an average of two to four isocyanate groups per molecule and comprising 5 to 20 carbon atoms (in addition to nitrogen, oxygen, and hydrogen) and include aliphatic, cycloaliphatic, aryl-aliphatic, and aromatic polyisocyanates, as well as products of their oligomerization, used alone or in mixtures of two or more. Diisocyanates are more preferred. Aliphatic isocyanates generally tolerate UV exposure belter than aromatic isocyanates in terms of low color development on exposure.

Examples of aliphatic polyisocyanates include alpha, omega-alkylene diisocyanates having from 5 to 20 carbon atoms, such as hexamethylene-1,6-diisocyanate, 1,12-dodecane diisocyanate, 2,2,4-trimethyl-hexamethylene diisocyanate, 2,4,4-trimethyl-hexamethylene diisocyanate, 2-methyl-1,5-pentamethylene diisocyanate, and the like.

Examples of suitable cycloaliphatic polyisocyanates include dicyclohexylmethane diisocyanate, (commercially available as Desmodur™ W from Bayer Corporation), isaphorone diisocyanate, 1,4-cyclohexane diisocyanate, 1,3-bis-(isocyanatomethyl) cyclohexane, and the like.

Examples of araliphatic polyisocyanates include m-tetramethyl xylylene diisocyanate, p-tetramethyl xylylene diisocyanate, 1,4-xylylene diisocyanate, 1,3-xylylene diisocyanate, and the like.

### (ii) Active Hydrogen-containing Compounds

Any compound that provides a source of active hydrogen for reacting with isocyanate groups via the following reaction: -NCO+H-X → -NH-C(=O)-X, can be used as the active hydrogen-containing compound in this invention. Examples include but are not limited to polyols, polythiols and polyamines.

"Polyol" in this context means any product having an average of about two or more hydroxyl groups per molecule (e.g., isocyanate reactive polyol). Examples include low molecular weight products called "extenders" with number average molecular weight less than 500 Dalton such as aliphatic, cycloaliphatic and aromatic polyols, especially diols, having 2-20 carbon atoms, more typically 2-10 carbon atoms, as well as "macroglycols," i.e., polymeric polyols having molecular weights of at least 500 Daltons, more typically 1,000-10,000 Daltons, or even 1,000-6,000 Daltons. Examples of such macroglycols include polyester polyols including alkyds, polyether polyols, polycarbonate polyols, polyhydroxy polyester amides, hydroxyl-containing polycaprolactones, hydroxyl-containing acrylic polymers, hydroxyl-containing epoxides, polyhydroxy polycarbonates, polyhydroxy polyacetals, polyhydroxy polythioethers, polysiloxane polyols, ethoxylated polysiloxane polyols, polybutadiene polyols and hydrogenated polybutadiene polyols, polyisobutylene polyols, polyacrylate polyols, halogenated polyesters and polyethers, and the like, and mixtures thereof. The polyester polyols, polyether polyols, polycarbonate polyols, polysiloxane polyols, and ethoxylated polysiloxane polyols are preferred.

In one embodiment, it is desirable to have 20 or 25 to 55 or 60 % by weight of isocyanate reactive polyols incorporated in the prepolymer or polyurethane component. In one embodiment these have a number average molecular weight above 500 Daltons per mole. In one embodiment, it is desirable to have one of the polyols be derived from or characterized as a poly(propylene glycol) polyol, e.g., poly(propylene oxide). In one embodiment, it is desirable that the weight ratio of poly(propylene glycol) polyol to the other polyols be from 10:90 to 90:10.

The polyester polyols typically are esterification products prepared by the reaction of organic polycarboxylic acids or their anhydrides with a stoichiometric excess of a diol or diols. Examples of suitable polyols for use in the reaction include poly(glycol adipate)s, poly(ethylene terephthalate) polyols, polycaprolactone polyols, alkyd polyols, orthophthalic polyols, sulfonated and phosphonated polyols, and the like, and mixtures thereof

The diols used in making the polyester polyols include alkylene glycols, e.g., ethylene glycol, 1,2- and 1,3-propylene glycols, 1,2-, 1,3-, 1,4-, and 2,3-butylene glycols, hexane diols, neopentyl glycol, 1,6-hexanediol, 1,8-octanediol, and other glycols such as bisphenol-A, cyclohexane diol, cyclohexane dimethanol (1,4-bis-hydroxymethylcyclohexane), 2-methyl-1,3-propanediol, 2,2,4-trimethyl-1,3-pentanediol, diethylene glycol, triethylene glycol, tetraethylene glycol, polyethylene glycol, dipropylene glycol, polypropylene glycol, dibutylene glycol, polybutylene glycol, dimerate diol, hydroxylated bisphenols, polyether glycols, halogenated diols, and the like, and mixtures thereof. Preferred diols include ethylene glycol, diethylene glycol, butylene glycol, hexane diol, and neopentyl glycol.

Suitable carboxylic acids used in making the polyester polyols include dicarboxylic acids and tricarboxylic acids and anhydrides, e.g., maleic acid, maleic anhydride, succinic acid, glutaric acid, glutaric anhydride, adipic acid, suberic acid, pimelic acid, azelaic acid, sebacic acid, chlorendic acid, 1,2,4-butane-tricarboxylic acid, phthalic acid, the isomers of phthalic acid, phthalic anhydride, fumaric acid, dimeric fatty acids such as oleic acid, and the like, and mixtures thereof. Preferred polycarboxylic acids used in making the polyester polyols include aliphatic and/or aromatic dibasic acids.

Particularly interesting polyols are the polyester diols, i.e., any compound containing the -C(=O)-O- group. Examples include poly(butanediol adipate), caprolactones, acid-containing polyols, polyesters made from hexane diol, adipic acid and isophthalic acid such as hexane adipate isophthalate polyester, hexane diol neopentyl glycol adipic acid polyester diols, e.g., Piothane 67-3000 HAI, Piothane 67-500 HAI, Piothane 67-3000 HNA (Panolam Industries) and Piothane 67-1000 HNA; as well as propylene glycol maleic anhydride adipic acid polyester diols, e.g., Piothane 50-1000 PMA; and hexane diol neopentyl glycol fumaric acid polyester diols, e.g., Piothane 67-500 HNF. Other polyester diols include Rucoflex™. S1015-35, S1040-35, and S-1040-110 (Bayer Corporation).

The polyether polyols that can be used as the active hydrogen-containing compound in accordance with the present invention contain the -C-O-C- group. They can be obtained in a known manner by the reaction of (A) the starting compounds that contain reactive hydrogen atoms, such as water or the diols set forth for preparing the polyester polyols, and (B) alkylene oxides, such as ethylene oxide, propylene oxide, butylene oxide, styrene oxide, tetrahydrofuran, epichlorohydrin, and the like, and mixtures thereof. Preferred polyethers include poly(propylene glycol), polytetrahydrofuran, and copolymers of poly(ethylene glycol) and poly(propylene glycol).

Polycarbonate polyols include those containing the -O-C(=O)-O- group. They can be obtained, for example, from the reaction of (A) diols such 1,3-propanediol, 1,4-butanediol, 1,6-hexanediol, diethylene glycol, triethylene glycol, tetraethylene glycol, and the like, and mixtures thereof with (B) diarylcarbonates such as diphenylcarbonate or phosgene. Aliphatic and cycloaliphatic polycarbonate polyols can also be used.

Useful polyhydroxy polyacetals include the compounds that can be prepared from the reaction of (A) aldehydes, such as formaldehyde and the like, and (B) glycols such as diethylene glycol, triethylene glycol, ethoxylated 4,4'-dihydroxy-diphenyldimethylmethane, 1,6-hexanediol, and the like. Polyacetals can also be prepared by the polymerization of cyclic acetals.

Instead of or in addition to a polyol, other compounds may also be used to prepare the prepolymer. Examples include polyamines, polyester amides and polyamides, such as the predominantly linear condensates obtained from reaction of (A) polybasic saturated and unsaturated carboxylic acids or their anhydrides, and (B) polyvalent saturated or unsaturated aminoalcohols, diamines, polyamines, and the like, and mixtures thereof.

Diamines and polyamines are among the preferred compounds useful in preparing the aforesaid polyester amides and polyamides. Suitable diamines and polyamines include 1,2-diaminoethane, 1,6-diaminohexane, 2-methyl-1,5-pentanediamine, 2,2,4-trimethyl-1,6-hexanediamine, 1,12-diaminododecane, 2-aminoethanol, 2-[(2-aminoethyl)amino]-ethanol, piperazine, 2,5-dimethylpiperazine, 1-amino-3-aminomethyl-3,5,5-trimethyl-cyclohexane (isophorone diamine or IPDA), bis-(4-aminocyclohexyl)-methane, bis-(4-amino-3-methyl-cyclohexyl)-methane, 1,4-diaminocyelohexane, 1,2-propylenediamine, hydrazine, urea, amino acid hydrazides, hydrazides of semicarbazidocarboxylic acids, bis-hydrazides and bis-semicarbazides, diethylene triamine, triethylene tetramine, tetraethylene pentamine, pentaethylene hexamine, N,N,N-tris-(2-aminoethyl)amine, N-(2-piperazinoethyl)-ethylene diamine, N,N'-bis-(2-aminoethyl)-piperazin- e, N,N,N,-tris-(2-aminoethyl)ethylene diamine, N-[N-(2-aminoethyl)-2-amino- ethyl]-N'-(2-aminoethyl)-piperazine, N-(2-aminoethyl)-N'-(2-piperazinoethy-1)-ethylene diamine, N,N-bis-(2-aminoethyl)-N-(2-piperazinoethyl)amine, N,N-bis-(2-piperazinoethyl)-amine, polyethylene imines, iminobispropylamine, guanidine, melamine, N-(2-aminoethyl)-1,3-propane diamine, 3,3'-diaminobenzidine, 2,4,6-triaminopyrimidine, polyoxypropylene amines, tetrapropylenepentamine, tripropylenetetramine, N,N-bis-(6-aminohexyl)amine, N,N'-bis-(3-aminopropyl)ethylene diamine, and 2,4-bis-(4'-aminobenzyl)-aniline, and the like, and mixtures thereof. Preferred diamines and polyamines include 1-amino-3-aminomethyl-3,5,5-tri- methyl-cyclohexane (isophorone diamine or IPDA), bis-(4-aminocyclohexyl)-m- ethane, bis-(4-amino-3-methylcyclohexyl)-methane, ethylene diamine, diethylene thiamine, triethylene tetramine, tetraethylene pentamine, and pentaethylene hexamine, and the like, and mixtures thereof. Other suitable diamines and polyamines include Jeffamine™. D-2000 and D-4000, which are amine-terminated polypropylene glycols, differing only by molecular weight, and which were available from Huntsman Chemical Company.

Low molecular weight alkylene polyols (e.g., glycerol, trimethylol propane, etc.) can be used as urethane branching agents. Branching can provide beneficial properties to a urethane polymer and can provide additional functional (reactive) end groups (generally above 2 as one goes from a linear oligomers to a branched oligomers or polymer) for each urethane prepolymer or polymer.

### (iii) Water-Dispersibility Enhancing Compounds

Polyurethanes are generally hydrophobic and not water-dispersible. In accordance with the invention, therefore, at least one water-dispersibility enhancing compound (i.e., monomer), which has at least one, hydrophilic (e.g., poly(ethylene oxide)), ionic or potentially ionic group is included in the polyurethane prepolymer to assist dispersion of the polyurethane prepolymer as well as the chain-extended polyurethane made therefrom in water, thereby enhancing the stability of the dispersions so made. Often these are diols or polyols containing water-dispersibility enhancing functionality. Often these are of less than 500 number average molecular weight if ionizable. In one embodiment, the composition contains 1 or 2 to 10 or 12% by weight of a diol, polyol or polyols or combinations thereof bearing active hydrogen groups as and containing a ionizable or potentially ionizable water dispersing group solubilized in either b) a vinyl monomer or c) a reactive polyol or a combination thereof. Typically, this is done by incorporating a compound bearing at least one hydrophilic group or a group that can be made hydrophilic (e.g., by chemical modifications such as neutralization) into the polymer chain. These compounds may be of a nonionic, anionic, cationic or zwitterionic nature or the combination thereof. For example, anionic groups such as carboxylic acid groups can be incorporated into the prepolymer in an inactive form and subsequently activated by a salt-forming compound, such as a tertiary amine defined more fully hereinafter, in order to create a prepolymer having an acid number from 1 to 60, typically 1 to 40, or even 10 to 35 or 12 to 30 or 14 to 25 mg KOH/g. Other water-dispersibility enhancing compounds can also be reacted into the prepolymer backbone through urethane linkages or urea linkages, including lateral or terminal hydrophilic ethylene oxide or ureido units.

Water dispersibility enhancing compounds of particular interest are those which can incorporate carboxyl groups into the prepolymer. Normally, they are derived from hydroxy-carboxylic acids having the general formula (HO)ₓQ(COOH)_{y}, wherein Q is a straight or branched hydrocarbon radical containing 1 to 12 carbon atoms, and x and y are 1 to 3. Examples of such hydroxy-carboxylic acids include dimethylolpropanoic acid (DMPA), dimethylol butanoic acid (DMBA) (most preferred), citric acid, tartaric acid, glycolic acid, lactic acid, malic acid, dihydroxymalic acid, dihydroxytartaric acid, and the like, and mixtures thereof Dihydroxy-carboxylic acids are more preferred with dimethylolproanoic acid (DMPA) and dimethylol butanoic acid (DMBA) being more preferred than the others.

Water dispersibility enhancing compounds may include reactive polymeric polyol components that contain pendant anionic groups which can be polymerized into the prepolymer backbone to impart water dispersible characteristics to the polyurethane subsequent to chain extension. The term anionic functional polymeric polyol includes anionic polyester polyols, anionic polyether polyols, and anionic polycarbonate polyols. These polyols include moieties that contain active hydrogen atoms. Such polyols containing anionic groups are described in U.S. Patent No. 5,334,690.

Another group of water-dispersibility enhancing compounds of particular interest are side chain hydrophilic monomers (nonionic dispersibility enhancing components). Some examples include alkylene oxide polymers and copolymers in which the alkylene oxide groups have from 2-10 carbon atoms as shown, for example, in U.S. Published Patent Application No. 20030195293 to Noveon, Inc. for breathable polyurethane blends.

Other suitable water-dispersibility enhancing compounds include thioglycolic acid, 2,6-dihydroxybenzoic acid, sulfoisophthalic acid (this component would preferably be incorporated as part of a polyester), polyethylene glycol, and the like, and mixtures thereof

### (iv) Compounds Having at Least One Crosslinkable Functional Group

Compounds having at least one crosslinkable functional group can also be incorporated into the polyurethane prepolymers of the present invention, if desired. Examples of such compounds include those having carboxylic, carbonyl, amine, hydroxyl, epoxy, acetoacetoxy, urea-formaldehyde, auto-oxidative groups that crosslink via oxidization, ethylenically unsaturated groups optionally with U.V. activation, olefinic and hydrazide groups, blocked isocyanates, and the like, and mixtures of such groups and the same groups in protected forms (so crosslinking can be delayed until the composition is in its application (e.g., applied to a substrate) and coalescence of the particles has occurred) which can be reversed back into original groups from which they were derived (for crosslinking at the desired time).

Other suitable compounds providing crosslinkability include thioglycolic acid, 2,6-dihydroxybenzoic acid, and the like, and mixtures thereof.

### (v) Catalysts

The prepolymer may be formed without the use of a catalyst if desired.

### (vi) Ingredient Proportions

Normally, the prepolymer produced in the present invention will be isocyanate-terminated. For this purpose, the ratio of isocyanate to active hydrogen in forming the prepolymer typically ranges from 1.3/1 to 2.5/1, in one embodiment from 1.5/1 to 2.1/1, and in another embodiment from 1.65/1 to 2/1.

The typical amount of water-dispersibility enhancing compound (total of all ionic and nonionic) in the prepolymer will be up to 50 wt.%, more typically from 2 wt.% to 30 wt.%, and more especially from 2 wt.% to 10 wt.% based on the total weight of the prepolymer.

The amount of optional compounds having crosslinkable functional groups in the prepolymer will typically be up to 1 milliequivalent, preferably from 0.05 to 1 milliequivalent, and more preferably from 0.1 to 0.8 milliequivalent per gram of final polyurethane on a dry weight basis. In one embodiment, the composition will be substantially free of unsaturated vegetable oils described in WO2006/047746 as oil modified polyols in paragraphs 0016 through 0025. Substantially free of can be less than 5 wt.%, desirably less than 1 wt.%, and preferably less than 0.1 or 0.01 wt.% base on the weight of the film forming components (i.e., dispersion less water and readily volatile organic solvents).

Where the compositions of the invention incorporates non-polyurethanic non-vinylic polyhydrazine (or polyhydrazone) compound(s) and/or oligomeric urethane polyhydrazine (or polyhydrazone) compound(s), the level of such polyhydrazine (or polyhydrazone) compounds(s) in one embodiment is that to provide a range of 0.05 to 20 moles hydrazine (or hydrazone) groups present per mole of carbonyl groups present, in another embodiment 0.1 to 10 moles per mole, and in another embodiment 0.67 to 1.11 moles per mole. Examples of such suitable polyhydrazine (or polyhydrazone) compounds include dicarboxylic acid bishydrazides of formula

H₂ N--NH--C(O)--R⁹ --C(O)--NH--NH₂

and dicarboxylic acid bis-hydrazones of formula

R¹⁰ R¹¹ C=N--NH--C(O)--R--C(O)--NH-N=CR¹⁰ R¹¹

wherein R⁹ is a covalent bond or a polyalkylene (preferably polymethylene) or alicyclic group having from 1 to 34 carbon atoms or a divalent aromatic ring, and R¹⁰ and R¹¹ are selected from the group consisting of H and (C₁ to C₆) alkyl and alicyclic groups. Examples of suitable dihydrazides include oxalic acid dihydrazide, malonic acid dihydrazide, succinic acid dihydrazide, glutaric acid dihydrazide, adipic acid dihydrazide, cyclohexane dicarboxylic acid bis-hydrazide, azelaic acid bis-hydrazide, and sebacic acid dihydrazide. Other suitable compounds are set forth in U.S. 4,983,662 at column 18, line 3 through column 18, line 42.

The compositions of the invention may optionally contain 0.0002 to 0.02 mole per mole of hydrazine group(s) of a heavy metal ion. This may be added in the form of suitable water-soluble metal salts, particularly chlorides, sulphates, metal hydrazine complexes, and acetates. Suitable heavy metal water-soluble salts are, in particular, those of Cu, Zn, Fe, Cr, Mn, Pb, V, Co and Ni.

### Prepolymer Manufacture

Aqueous dispersions of polyurethane composition particles are made in accordance with this invention by forming a polyurethane prepolymer. with a polyketone molecule, and dispersing this blend in aqueous medium.

Typically, prepolymer formation will be done by bulk or solution polymerizing the ingredients of the prepolymer. Thus, the ingredients forming the prepolymer, e.g., the polyisocyanate(s), the active hydrogen-containing compound(s) and/or the water-dispersibility enhancing compound(s), are combined to form the prepolymer. Alternatively, the optional ketone functional molecules/oligomers can be combined with the prepolymer at any time during prepolymer formation, i.e., at any time during the bulk/solution polymerization reaction or subsequent thereto during the dispersion forming process. In this disclosure, the process option of separately mixing the ionic dispersibility enhancing component (e.g., the dimethylolproanoic acid (DMPA) and dimethylol butanoic acid (DMBA)) with one or more of the polyols to get a uniform mixture of the dispersibility enhancing component (which might otherwise be a solid) is disclosed and claimed.

Bulk and solution polymerization are well known techniques and described, for example, in "Bulk Polymerization," Vol. 2, pp. 500-514, and "Solution Polymerization," Vol. 15, pp. 402-418, Encyclopedia of Polymer Science and Engineering, © 1989, John Wiley & Sons, New York. See, also, "Initiators," Vol. 13, pp. 355-373, Kirk-Othmer, Encyclopedia of Chemical Technology, © 1981, John Wiley & Sons, New York.

### Dispersion in an Aqueous Medium

Once the polyurethane prepolymer is formed, it is dispersed in an aqueous medium to form a dispersion of the blend. In this disclosure, the use of a surface tension modifying solvent is specifically taught as a modification. This component may locate itself at the interface between the water and the prepolymer or the interface of the prepolymer with the water. Its function is to decrease the surface tension making it easier to create a dispersed phase within the continuous phase of smaller particle size (increased interfacial surface area). If the ketone functional molecule(s)/oligomer(s) are combined with the prepolymer while it is in the form of a continuous oleophilic mass rather than discrete particles or droplets in water, the dispersed particles that are formed are composed of an intimate mixture of ketone functional molecule(s)/oligomer(s) and the prepolymer.

Dispersing the prepolymer in aqueous medium can be done by any conventional technique, in the same way that other polyurethane prepolymers made by bulk or solution polymerization are dispersed in water. Normally, this will be done by combining the prepolymer blend, with water with mixing. When or if solvent polymerization is employed, the solvent and other volatile components can optionally be distilled off from the final dispersion, if desired. Chain extender and/or the hydrazine functional moiety for reacting with the ketone group can be added at this stage or later.

In one embodiment of the invention, where the prepolymer includes enough water-dispersibility enhancing compound to form a stable dispersion without added emulsifiers (surfactants), the dispersion can be made without such compounds, i.e., substantially free of surfactants, if desired. The advantage of this approach is that the coatings or other products made from the polyurethane exhibit less water sensitivity, better film formation, less foaming and reduced growth of mold, bacteria and so forth.

### Prepolymer Neutralization

In those instances in which the prepolymer includes water-dispersibility enhancing compounds which produce pendant carboxyl groups, these carboxyl groups can be converted to carboxylate anions for enhancing the water-dispersibility of the prepolymer.

Suitable neutralizing agents for this purpose include tertiary amines, metal hydroxides, ammonium hydroxide, phosphines, and other agents well known to those skilled in the art. Tertiary amines and ammonium hydroxide are preferred, such as triethyl amine (TEA), dimethyl ethanolamine (DMEA), N-methyl morpholine, and the like, and mixtures thereof. It is recognized that primary or secondary amines may be used in place of tertiary amines, if they are sufficiently hindered to avoid interfering with the chain extension process.

### Chain Extension

The polyurethane composition dispersions in water produced as described above can be used as is, if desired. Alternatively, they can be chain extended to convert the prepolymers in the composite particles to more complex polyurethanes.

As a chain extender, at least one of water, inorganic or organic polyamine having an average of 2 or more primary and/or secondary amine groups, amine functional polyols, ureas, or combinations thereof is suitable for use in this invention. Suitable organic amines for use as a chain extender include diethylene triamine (DETA), ethylene diamine (EDA), meta-xylylenediamine (MXDA), aminoethyl ethanolamine (AEEA), 2-methyl pentane diamine, and the like, and mixtures thereof. Also suitable for practice in this invention are propylene diamine, butylene diamine, hexamethylene diamine, cyclohexylene diamine, phenylene diamine, tolylene diamine, 3,3-dichlorobenzidene, 4,4'-methylene-bis-(2-chloroaniline), 3,3-dichloro-4,4-diamino diphenylmethane, sulfonated primary and/or secondary amines, and the like, and mixtures thereof. Suitable inorganic amines include hydrazine, substituted hydrazines, and hydrazine reaction products, and the like, and mixtures thereof. Suitable ureas include urea and it derivatives, and the like, and mixtures thereof. Hydrazine is most preferred or hydrazine combined with other extenders, preferably water soluble ones such as ethylene diamine and is most preferably used as a solution in water. The amount of chain extender, which can be added before or after dispersion, typically ranges from 0.5 to 1.15 equivalents based on available equivalents of isocyanate.

### Additional Ingredients and Features

The polyurethane prepolymers, the product polyurethanes produced therefrom, and the aqueous prepolymer composition aqueous dispersions of the present invention as described above can be made with various additional ingredients and features in accordance with known polyurethane technology. Examples include:
Polymer Branching

Branching of the ultimate polymer product, as well as the prepolymer, can be accomplished for aiding tensile strength and improving resistance to creep-that is, recovery to that of or near its original length after stretching. In this regard, see U.S. Published Patent Application No. 20030195293.

### Monofunctiomal Active Hydrogen-Containing Compounds

The prepolymers of this invention can also be made with monofunctional active hydrogen-containing compounds to enhance dispersibility of the prepolymer in aqueous medium and impart other useful properties, for example cross-linkability, as well as to adjust the morphology and rheology of the polymer when coated onto a substrate, as also described in the above-noted U.S. Published Patent Application No. 20030195293.

### Plasticizers

The polyurethane prepolymers and ultimate polyurethane products of this invention can be prepared in the presence of a plasticizer. The plasticizer can be added at any time during prepolymer preparation or dispersion or to the polyurethane during or after its manufacture. Plasticizers well known to the art can be selected for use in this invention according to parameters such as compatibility with the particular polyurethane and desired properties of the final composition. See, for example, WO 02/08327 A1, as well as the above-noted U.S. Published Patent Application No. 20030195293.

### Other Additives for Preparation of Dispersions

Other additives well known to those skilled in the art can be used to aid in preparation of the dispersions of this invention. Such additives include stabilizers, defoamers, antioxidants (e.g., Irganox 1010), UV absorbers, carbodiimides, activators, curing agents, stabilizers such as carbodiimide, colorants, pigments, neutralizing agents, thickeners, non-reactive and reactive plasticizers, coalescing agents, waxes, slip and release agents, antimicrobial agents, surfactants such as Pluronic™ F68-LF and IGEPAL™ CO630 and silicone surfactants, metals, coalescents, salts, flame retardant additives (e.g., antimony oxide), antiozonants, and the like. They can optionally be added as appropriate before and/or during the processing of the dispersions of this invention into finished products as is well known to those skilled in the art. Additives may also be used as appropriate in order to make articles or to treat other products (such as by impregnation, saturation, spraying, coating, or the like). The dispersions of this invention typically have total solids of at least 20 wt. %, preferably at least 25 wt. % and more preferably at least 30 wt. %.

### Blends with Other Polymers and Polymer Dispersions

The dispersions of this invention can be combined with commercial polymers and polymer dispersions by methods well known to those skilled in the art. Such polymers and dispersions include those described in WIPO Publication WO 02/02657 A2, U.S. Patent No. 4,920,176, U.S. Patent No. 4,292,420, U.S. Patent No. 6,020,438, U.S. Patent No. 6,017,997 and a review article by D. P. Tate and T. W. Bethea, Encyclopedia of Polymer Science and Engineering, Vol. 2, p.537.

Similarly, the dispersions of this invention can be formed by dispersing the prepolymer mixture in a previously formed aqueous dispersion of another polymer or polymers and/or nanoparticles. In other words, the aqueous medium into which the prepolymer mixture is dispersed in accordance with the present invention can be a previously formed aqueous dispersion of another polymer or polymers including those made by emulsion and suspension polymerization techniques and/or nanoparticles (or vice versa where one would disperse another urethane into the inventive urethane dispersion).

### Hybrids (vinyl/acrylic)

The unsaturated monomers of the aqueous dispersions of this invention can be polymerized by conventional free radical sources to form a vinyl/acrylic polymer within the polyurethane particle. Vinyl is a very generic term for unsaturated monomers (often having alpha-beta unsaturation) or polymers derived from those monomers. Acrylic will refer to acrylic acid, acrylates (being esters of acrylic acid), and alkacrylates such as methacrylates and ethacrylates. Additional free radically polymerizable material (unsaturated monomers) may be added to the already present unsaturated monomers in the prepolymer dispersion either to copolymerize with the already present monomers or to subsequently polymerize into a second or third vinyl polymer in the same particle. The original particles may be used as seed particles for polymerization. This can be done by forming the aqueous dispersions of polyurethane composite in the manner described above and then polymerizing additional monomers by emulsion or suspension polymerization in the presence of these dispersions, i.e., with the inventive dispersions being mixed with the additional monomers before polymerisation is completed. Hybrids of polyurethanes and acrylics can be made to advantage by this approach. In one embodiment, the weight ratio of polymers from vinyl monomers to urethane polymers will be 10:90 to 90:10. In another embodiment, it will be 20:80 to 80:20 and in a third embodiment from 30:70 to 70:30.

Still another way of making hybrid polymers in accordance with the present invention is to includes ethylenically unsaturated monomers in the polyurethane prepolymer reaction system and to cause these monomer to polymerize when or after the prepolymer is dispersed in aqueous medium. In this approach, the ethylenically unsaturated monomers act as a diluent during prepolymer formation. In the aqueous medium, these ethylenically unsaturated monomers can be polymerized to completion with or without additional monomers being added. Hybrids of polyurethanes and acrylics can be made to advantage by this approach, as well. This type of technology is taught in U.S. Patent 4.644,030; U.S. Patent 4,730,021; U.S. Patent 5,137,961; and U.S. Patent 5,371,133. Another urethane-acrylic hybrid is often known as synthetic alloy urethane-acrylic where a urethane polymer is dispersed into a waterborne polymer dispersion or emulsion. This is taught in WO 98/38249 and U.S. Patent 6,022,925.

A method variation to make urethane-acrylic copolymers in accordance with the present invention by either including ethylenically unsaturated monomers in the polyurethane prepolymer reaction system and/or to add them to the final polymer dispersion and to cause these monomer to copolymerize with the polyurethane after the prepolymer is dispersed in aqueous medium is described in WO06020281A1. In this approach, the ethylenically unsaturated monomers are reacted into the polyurethane backbone via a RAFT (reversible addition-fragmentation chain transfer) agent containing hydroxyl functionality that is incorporated into the polyurethane of the invention during prepolymer formation using conventional free radical polymerization methods. This is in contrast to the previous descried "urethane - acrylic hybrid" or composite approach where the acrylic and urethane polymers remain for the most part as individual polymer chains unless grafting points (unsaturated groups, particularly activated unsaturated groups) are incorporated in the polyurethane. The acrylic polymer may potentially become grafted randomly into the polyurethane during free radical polymerization via hydrogen abstraction on the polyurethane backbone.

The acrylic polymer or copolymer can be from a variety of unsaturated monomers such as from acrylate, alkyl (alk)acrylate, vinyl chloride, vinylidene chloride, vinyl acetate, styrene, butadiene, vinyl acetate and unsaturated acid containing monomers.

The various alkyl acrylates (or esters or acrylic acid) have the formula 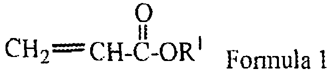 where R¹ is an alkyl group containing 1 to about 15 carbon atoms, an alkoxyalkyl group containing a total of 1 to about 10 carbon atoms, a cyanoalkyl group containing 1 to about 10 carbon atoms, or a hydroxy alkyl group containing from 1 to about 18 carbon atoms. The alkyl structure can contain primary, secondary, or tertiary carbon configurations and normally contains 1 to about 10 carbon atoms with 2 to 8 carbon atoms being preferred. Examples of such acrylic esters include methyl acrylate, ethyl acrylate, propyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, n-decyl acrylate, n-dodecyl acrylate, n-actadecyl acrylate, and the like. Preferred examples include ethylacrylate, butyl acrylate, 2-ethyl hexyl acrylate, and the like.

The various alkyl alkacrylates (or esters of alkacrylic acid) have the formula 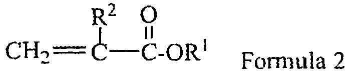 wherein R¹ is as set forth above with respect to Formula 1 and R² is an alkyl having from 1 to about 4 carbon atoms, desirably 1 or 2 carbon atoms with methyl being especially preferred. Examples of various alkyl (alk)acrylates include methyl methacrylate, ethyl methacrylate, methoxymethyl acrylate, methoxyethyl acrylate, ethoxyethyl acrylate, butoxy ethyl acrylate, ethoxypropyl acrylate, and the like. Derivatives include hydroxyethyl acrylate, hydroxypropyl acrylate, hydroxybutyl acrylate, and the like. Mixtures of two or more of the above monomers can also he utilized.

Unsaturated acid containing monomers include acrylic acid, methacrylic acid, itaconic acid, maleic acid, fumaric acid, 2-carboethyl acrylate and the like. Acrylic acid is preferred. Half esters of the above carboxylic acids can also be used as monomers wherein the ester portion is desirably an alkyl having from 1 to about 10 carbon atoms and specific examples include mono methyl maleate, mono methyl fumerate, mono methyl itaconate, and the like.

Other co-polymerizable (ethylenically unsaturated) monomers in lesser amounts may be utilized to make copolymers including styrenic monomers (as a comonomer in the acrylate latex), vinyl chloride type monomers, acrylonitrile type monomers, various vinyl ester monomers, various acrylamides monomers, various alkynol acrylamides and the like. Considering the styrenic monomers (as both a primary monomer in styrene-butadiene polymers or a co-monomer in acrylate polymers), they are often referred to as vinyl substituted aromatic compounds (styrenic monomers) and include styrene, alkyl substituted styrene 1-vinylnaphthalene, 2-vinylnaphthalene, and the alkyl, cycloalkyl, aryl, alkaryl and aralkyl derivatives thereof in which the total number of carbon atoms in the combined substituents is generally from 8 to about 12. Examples of such compounds include 3-methylstyrene vinyltoluene; alpha-methylstyrene; 4-n-propylstyrene, 4-t-butylstyrene, 4-dodecyl- styrene, 4-cyclohexylstyrene; 2-ethyl-4-benzylstyrene; 4-methoxy-styrene; 4-dimethylaminostyrene; 3,5-diphenoxystyrene; 4-p-tolylstyrene; 4-phenylstyrene; 4,5-dimethyl-1-vinylnaphthalene; 3-n-propyl-2-vinyl- naphthalene, and the like. Styrene is preferred.

The vinyl chloride type monomers include vinyl chloride, vinylidene chloride, and the like.

The vinyl esters can generally be represented by the following formula 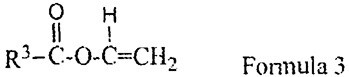 where R³ is an alkyl, generally having from 1 to about 10 or 12 carbon atoms with from about 1 to about 6 carbon atoms being preferred. Accordingly, suitable vinyl esters include vinyl formate, vinyl acetate, vinyl propionate, vinyl butyrate, vinyl valerate, and the like. Vinyl esters with larger R³ groups include the vinyl versatate monomers, such as Veo VA-P, Veo Va-10, and Veo Va-11.

The various vinyl ethers can be represented by the formula 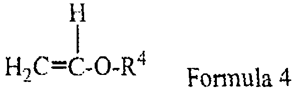 where R⁴ is desirably an alkyl having from 1 to about 10 carbon atoms. Specific examples include methyl vinyl ether, ethyl vinyl ether, butyl vinyl ether, and the like with methyl vinyl ether being preferred.

The acrylonitrile type monomers include acrylonitrile, or methacrylonitrile, or ethacrylonitrile, and the like can be utilized. Acrylamide monomers which can be polymerized to form a copolymer generally have the following formula 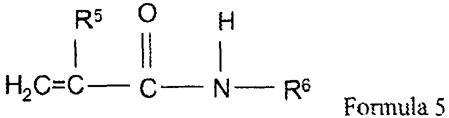 wherein R⁵ is H or methyl and R⁶ is generally hydrogen or an alkyl, straight chain or branched, having from I to about 18 carbon atoms. Specific examples include acrylamide, ethyl acrylamide, butyl acrylamide, tert-octyl acrylamide, and the like. Unlike the other optional monomers the one or more acrylamides can be utilized in large amounts such as up to about 20 percent by weight of the copolymer and desirably from about 0.5 to about 10 percent by weight.

The alkenol acrylamides can generally have the formula 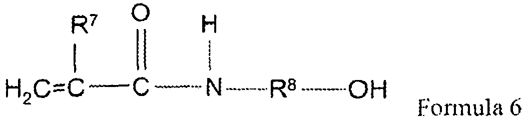 wherein R⁷ is H or methyl, R⁸ can be hydrogen and preferably is an alkyl, straight chain or branched, having from 1 to about 18 carbon atoms and desirably from 1 to 10 carbon atoms. Specific examples of alkenol acrylamides include methanol acrylamide, ethanol acrylamide, propanol acrylamide, methylol methacrylamide, and the like.

Functionalized acrylamides can also be utilized. Examples of such acrylamides include AMPS®, i.e., acrylamidomethylpropane sulfonic acid, DMAPMA, i.e., dimethylaminopropyl methacryamide, and the like.

Carbonyl containing unsaturated comonomers may be copolymerized with the above monomers to make acrylic or vinyl polymers. Examples of carbonyl-containing monomers which may be mentioned include acrolein, methacrolein, diacetone-acrylamide, crotonaldehyde, 4-vinylbenzaldehyde, vinyl alkyl ketones of 4 to 7 carbon atoms such as vinyl methyl ketone, and acryloxy- and methacryloxy-alkyl propranols of formula H₂C-C(R³)-C(O)-O-C(R⁴)H-C(R⁵)(R⁶)-C(O)H where R³ is H or methyl. R⁴ is H or alkyl of 1 to 3 carbon atoms, R⁵ is alkyl of 1 to 3 carbon atoms, and R⁶ is alkyl of 1 to 4 carbon atoms. Further examples include acrylamidopivalaldehyde, methacrylamidopivalaldehyde, 3-acrylamidomethyl-anisaldehyde, diacetone acrylate, acetonyl acrylate, diacetone methacrylate, acetoacetoxyethylmethacrylate, 2-hydroxypropylacrylate acetylacetate, and butanediolacrylate acetylacetate. More details on using these monomers are in U.S. Patent 4,983,662.

The polymers can be polymerized by one or more free radical initiators to form one or more different alkali sensitive copolymers of the present invention. Conventionally free radical initiators known to the art and to the literature can be utilized to initiate polymerisation of the various above-noted monomers or co-monorners to form a polymer or copolymer. Such free radical initiators generally include the persulfates, the peroxides, and azo compounds, as well as redox combinations and radiation sources. Examples of preferred persulfate initiators include potassium persulfate, sodium persulfate, or ammonium persulfate, and the like. The free radical polymerization can be an emulsion, bulk, solution, dispersion, etc., polymerization.

Generally, any type of peroxide, azo, redox system, or related initiator system can be utilized. Peroxide systems include dicumyl peroxide, cumene hydroperoxide, t-butyl perbenzoate, bis(t-butylperoxy) diisopropyl benzene, diisopropyl benzene hydroperoxide and n-butyl 4,4-bis(t-butylperoxy) valerate, as well as benzoyl peroxide, and t-butyl hydroperoxide, and the like. Cumene hydroperoxide, t-butyl hydroperoxide and diisopropyl benzene hydroperoxide are preferred. Azo initiators include 2,2'-azobis(isobutyronitrile)(AIBN) and related azo initiators.

Polymers or copolymers can be made by utilizing chain-transfer agents/polymer physical property modifiers. Conventional chain-transfer agents can be utilized such as various mercaptans, for example thioethanol mercaptan, hydroxyl ethyl mercaptan, various reaction products of alkyl esters of mercaptan with acidic acid or with thiogylcolic acid, and the like wherein the alkyl group has from about 2 to about 20 carbon atoms. Another suitable chain transfer agent is beta mercaptopropanoic acid and its esters such as butyl-3-mercaptoproprinate.

Another technique is to disperse an isocyanate prepolymer into a waterborne polyethylenic polymer dispersion as taught in WO 98/38249.

### Water-Borne Energy Curable Polyurethane Compositions

It is already known that water-borne polyurethane compositions can be cured by application of energy (UV and IR radiation and/or electron beams) and can be made by end-capping the polyurethane with (meth)acrylic esters and other ethylenically unsaturated monomers. This technology can be applied to this invention to provide energy-curable water-borne polyurethane coatings.

### Alternative Methods of Manufacture

Described above is a typical way the dispersions of the present invention can be made, i.e., by forming a prepolymer blend in the substantial absence of water and then dispersing the blend in an aqueous medium with mixing. Other known ways of making aqueous polyurethane dispersions can also be used to make the dispersions of this invention. Examples are

### (i) Shear Mixing

Dispersing the prepolymer by shear forces with emulsifiers (external emulsifiers, such as surfactants, or internal emulsifiers having nonionic, anionic, cationic and/or zwitterionic groups as part of or pendant to the polyurethane backbone, and/or as end groups on the polyurethane backbone).

### (ii) Acetone process

A prepolymer is formed with or without the presence of acetone, MEK, and/or other polar solvents that are non-reactive and easily distilled. The prepolymer is further diluted in said solvents as necessary, and optionally chain extended with an active hydrogen-containing compound. Water is added to the (optionally chain-extended or during chain extension to control viscosity) polyurethane, and the solvents are distilled off. A variation on this process would be to chain extend the prepolymer after its dispersion into water or into water containing chain extender.

### (iii) Melt Dispersion Process

An isocyanate-terminated prepolymer is formed, and then reacted with an excess of ammonia or urea to form a low molecular weight oligomer having terminal urea or biuret groups. This oligomer is dispersed in water and chain extended by methylolation of the biuret groups with formaldehyde.

### (iv) Ketazine and Ketimine Processes.

Hydrazines or diamines are reacted with ketones to form ketazines or ketimines. These are added to a prepolymer, and remain inert to the isocyanate. As the prepolymer is dispersed in water, the hydrazine or diamine is liberated, and chain extension takes place as the dispersion is taking place.

### (v) Continuous Process Polymerization.

An isocyanate-terminated prepolymer is formed. This prepolymer is pumped through high shear mixing head(s) and dispersed into water and then chain extended at said mixing head(s), or dispersed and chain extended simultaneously at said mixing head(s). This is accomplished by multiple streams consisting of prepolymer (or neutralized prepolymer), optional neutralizing agent, water, and optional chain extender and/or surfactant.

### (vi) Reverse Feed Process.

Water and optional neutralizing agent(s) and/or extender amine(s) are charged to the prepolymer under agitation. The prepolymer can be neutralized before water and/or diamine chain extenders are added.

### Applications

The aqueous polyurethane composite particle dispersions of the present invention, both in prepolymer and chain extended form, are useful to make coatings, adhesives, and films for porous and non-porous substrates such as papers, non-woven materials, textiles, leather, wood, concrete, masonry, metals with or without primer, plastics (e.g., polypropylene, polyester, polyurethane), house wrap and other building materials, fiberglass, polymeric articles, personal protective equipment (such as hazardous material protective apparel, including face masks, medical drapes and gowns, and firemen's turnout gear), and the like. Applications include papers and non-wovens; fibrous materials; films, sheets, composites, and other articles; inks and printing binders; flock and other adhesives; and personal care products such as skin care, hair care, and nail care products; livestock and seed applications; and the like. A preferred embodiment is use as a mar and scratch resistant interior or exterior coating, such as plastics coatings for vehicles and/or consumer electronics and/or wood floor coatings. As coating compositions, they may be applied by consumers or professionals by any conventional method including brushing, dipping, flow coating, spraying, and the like.

Any fibrous material can be coated, impregnated or otherwise treated with the compositions of this invention by methods well known to those skilled in the art, including carpets as well as textiles used in clothing, upholstery, tents, awnings, and the like. Suitable textiles include fabrics, yarns, and blends, whether woven, non-woven, or knitted, and whether natural, synthetic, or regenerated. Examples of suitable textiles include cellulose acetate, acrylics, wool, cotton, jute, linen, polyesters, polyamides, regenerated cellulose (Rayon), and the like.

The compositions of this invention can be used as adhesives or to augment or supplement adhesive types well known to those skilled in the art. For example, particular adhesive properties can be achieved by varying type and amount of isocyanate(s); type, amount, and molecular weight of polyol(s); and amount of poly(alkylene oxide) side chain units.

In addition, the principles of the present invention can be applied to other technologies for manufacturing aqueous polyurethane dispersions. For example, this invention can be applied to the technique for manufacturing plasticized polyurethane dispersions described in U.S. Patent No. 6,576,702 by adding plasticizers to the polyurethane prepolymers described in that patent before they are dispersed in aqueous medium. Similarly, this invention can be applied to the technique for manufacturing breathable polyurethane dispersions (i.e., dispersions which form layers of breathable polyurethanes) described in U.S. Published Patent Application No. 20030195293, as well as to the technique for manufacturing core-shell polyurethane dispersions described in U.S. Published Patent Application No. 20050004306.

Components and abbreviations used:
a. MDI = Isomer mixture of 4,4'diphenylmethane diisocyanate, 2.4'-diphenylmethane diisocyanate, and 2,2'diphenylmethane diisocyanate
b. TDI = Isomer mixture of 2,4-toluene diisocyanate and 2,6-toluene diisocyanate
c. BHT = butylated hydroxytoluene, or 2,6-di-tert-butyl-p-cresol
d. MMA = methyl methacrylate monomer
e. Piothane® 67-1000 HNA (OH# = 124.0) = hexane diol neopentyl glycol adipic acid polyester diol.
f. PPG 425 = about 425 MW polypropylene oxide polyol
g. PPG 725 = about 725 MW polypropylene oxide polyol
h. DMEA = dimethylethanolamine

### Example 1; Inventive Aromatic Polyurethane-Acrylic Dispersion:

A prepolymer was prepared by combining items 3-7 of the ingredients below at 20-30°C to a 4 neck flask equipped with a thermometer, overhead stirrer and gas inlet. The reaction was run under a stream of dry air introduced through the gas inlet on the reactor. The temperature of the reaction mixture was raised to 50-54°C and held at this temperature for 60 minutes and then the temperature adjusted to 35-40°C. Item 2 was homogenized with item 1 at an elevated temperature (e.g., 95°C). The temperature of the mixture of items 1 and 2 was then brought to between 60°C to 70°C and subsequently added to the reactor containing items 3-7 at a rate to keep the reaction mixture at a temperature <54°C. The temperature was then held at 48-51°C for 0.5-1 hour or until the theoretical NCO% was reached as indicated by titration of a small sample. When the prepolymer reached the theoretical NCO, it was dispersed shortly afterwards as described below.

**Recipe 1**

| Item # | Material | Parts |
|---|---|---|
| 1 | Piothane 67-1000 HNA (OH# = 124.0) | 183.3 |
| 2 | Dimethylolbutanoic acid | 33.3 |
| 3 | PPG725 | 43.7 |
| 4 | MMA | 145 |
| 5 | BHT | 0.2 |
| 6 | MDI | 102.9 |
| 7 | TDI | 71.7 |

The resulting isocyanate terminated prepolymer (about 468 g) was dispersed under adequate shear mixing in about 50 minutes into 736 g of deionized water containing 29.0 parts hydrazine hydrate (35% hydrazine content), 24.6 parts DMEA and 30.5g of di-ethylene glycol mono-n-butyl ether (butyl carbitol) with the prepolymer temperature held at 50°C. The dispersion temperature was controlled between 21-28°C during the dispersion process. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 2: Inventive Aromatic Polyurethane-Acrylic Dispersion:

This is similar to that of example 1 but a different solvent is used in the water phase of the dispersion of Example 1. The same prepolymer composition (about 467 g) prepared by the same process as Example 1 was dispersed into 829 g of deionized water containing 29.4 parts hydrazine hydrate (35% hydrazine content). 24.6 parts DMEA and 30.5g of di-propylene glycol mono-n-butyl ether in 50 minutes. The prepolymer was held at 50°C while dispersing and the water temperature controlled between 21-28. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 3; Comparative Polyurethane-Acrylic Dispersion;

This example demonstrates the affect of the solvent (di-ethylene glycol mono-n-butyl ether in example 1) used in the water phase of the dispersion of Example 1. The same prepolymer composition (466 g) prepared by the same process as Example I was dispersed into 736 g of deionized water containing 29.0 parts hydrazine hydrate (35% hydrazine content) and 24.6 parts DMEA in 50 minutes. The prepolymer was held at 50°C and the water temperature controlled between 21-28°C. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 4; Inventive Aromatic Polyurethane-Acrylic Dispersion:

A prepolymer was prepared by combining items 3-7 of the ingredients below at 20-30°C to a 4 neck flask equipped with a thermometer, overhead stirrer and gas inlet. The reaction was run under a stream of dry air introduced through the gas inlet on the reactor. The temperature of the reaction mixture was raised to 50-54°C and held at this temperature for 60 minutes and then the temperature adjusted to 35-40°C. Item 2 was homogenized with item 1 at an elevated temperature. The temperature of the mixture of items 1 and 2 was then adjusted to between 60°C to 70°C and subsequently added to the reactor containing items 3-7 at a rate to keep the reaction mixture at a temperature <54°C. The temperature was then held at 48-51°C for 0.5-1 hour or until the theoretical NCO% was reached as indicated by titration of a small sample. When the prepolymer reached the theoretical NCO, it was dispersed shortly afterwards as described below.

**Recipe 4**

| Item # | Material | Parts |
|---|---|---|
| 1 | Piothane 67-1000 HNA (OH# = 124.0) | 176.1 |
| 2 | Dimethylolbutanoic acid | 33.3 |
| 3 | PPG425 | 41.9 |
| 4 | MMA | t46 |
| 5 | BHT | 0.2 |
| 6 | MDI | 109.7 |
| 7 | TDI | 76.4 |

The resulting isocyanate terminated prepolymer (584 g) was dispersed in 50 minutes into 979 g of deionized water containing 30.7 parts hydrazine hydrate (35% hydrazine content), 24.7 parts DMEA and 30.7g of di-ethylene glycol mono-n-butyl ether (butyl carbitol) with the prepolymer temperature held at 50°C. The dispersion temperature was controlled between 21-28°C during the dispersion process. The dispersion was allowed to mix for 40-50. minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 5; Comparative Polyurethane-Acrylic Dispersion:

This example demonstrates the effect of using a surfactant (sodium lauryl sulfate) in place of the solvent (di-ethylene glycol mono-n-butyl ether in Example 1) used in the water phase of the dispersion of Example 4. The same prepolymer composition (584 g) prepared by the same process as Example 1 was dispersed into 979 g of deionized water containing 30.7 parts hydrazine hydrate (35% hydrazine content), 4.6 parts sodium lauryl sulfate and 24.7 parts DMEA in 50 minutes. The prepolymer was held at 50°C while dispersing and the water temperature controlled between 21-28°C. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 6; Poly-Ketone Oligomer Synthesis:

A poly-ketone functional oligomer was prepared by combining items 1-3 of the ingredients below in a 4 neck flask equipped with a thermometer, overhead stirrer and nitrogen gas inlet. With stirring and under a nitrogen blanket, the temperature of the reaction mixture was raised to 110°C to 114°C and held at this temperature for 1 hour. The temperature was then raised to 121-125°C and held at this temperature for four hours or until the acid number was <1.0 (mg/g). The final material was clear with an emerald green tint and a viscosity of ∼3,600 cps at 70°C at an acid number of 0.4mg/g.

| Item # | Material | Parts |
|---|---|---|
| 1 | Epoxidized Linseed Oil (Plasthall ELO) | 564.4 |
| 2 | Levulinic Acid | 249.8 |
| 3 | Hycat 2000 (activated Cr3+ catalyst) | 3.80 |

### Example 7; Inventive Aromatic Polyurethane-Acrylic Dispersion:

A prepolymer was prepared by combining items 3-7 of the ingredients below at 20-30°C to a 4 neck flask equipped with a thermometer, overhead stirrer and gas inlet. The reaction was run under a stream of dry air introduced through the gas inlet on the reactor. The temperature of the reaction mixture was raised to 50-54°C and held at this temperature for 60 minutes and then the temperature adjusted to 35-40°C. Item 2 was homogenized with item 1 at an elevated temperature. The temperature of the mixture of items 1 and 2 was then brought to between 60°C to 70°C and subsequently added to the reactor containing items 3-7 at a rate to keep the reaction mixture at a temperature <54°C. The temperature was then held at 48-51°C for 0.5-1 hour or until the theoretical NCO% was reached as indicated by titration of a small sample. When the prepolymer reached the theoretical NCO item 8 was added and homogenized into the prepolymer which was then dispersed shortly afterwards as described below.

**Recipe 7**

| Item # | Material | Parts |
|---|---|---|
| 1 | Piothane 67-1000 HNA (OH# = 124.0) | 126.4 |
| 2 | Dimethylolbutanoic acid | 23.0 |
| 3 | PPG725 | 30.1 |
| 4 | MMA | 100.0 |
| 5 | BHT | 0.2 |
| 6 | MDI | 71.0 |
| 7 | TDI | 49.5 |
| 8 | Poly-Ketone Oligomer (from Example 6) | 100 |

The resulting isocyanate terminated prepolymer (453 g) was dispersed in 50 minutes into 774 g of deionized water containing 18.0 parts hydrazine hydrate (35% hydrazine content), 14.4 parts DMEA and 23.2 g of di-ethylene glycol mono-n-butyl ether (butyl carbitol) with the prepolymer temperature held at 50°C. The dispersion temperature was controlled between 21-28°C during the dispersion process. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 8; Inventive Aromatic Polyurethane-Acrylic Dispersion:

A prepolymer was prepared by combining items 3-6 of the ingredients below at 20-30°C to a 4 neck flask equipped with a thermometer, overhead stirrer and gas inlet. The reaction was run under a stream of dry air introduced through the gas inlet on the reactor. The temperature of the reaction mixture was raised to 50-54°C and held at this temperature for 60 minutes and then the temperature adjusted to 35-40°C. Item 2 was homogenized with item 1 at an elevated temperature. The temperature of the mixture of items 1 and 2 was then brought to between 60°C to 70°C and subsequently added to the reactor containing items 3-6 at a rate to keep the reaction mixture at a temperature <54°C. The temperature was then held at 48-51°C for 0.5-1 hour or until the theoretical NCO% was reached as indicated by titration of a small sample. When the prepolymer reached the theoretical NCO, it was dispersed shortly afterwards as described below.

**Recipe 8**

| Item # | Material | Parts |
|---|---|---|
| 1 | Piothane 67-1000 HNA (OH# = 124.0) | 229.4 |
| 2 | Dimethylolbutanoic acid | 33.3 |
| 3 | MMA | 145 |
| 4 | BHT | 0.2 |
| 5 | MDI | 100.8 |
| 6 | TDI | 70.2 |

The resulting isocyanate terminated prepolymer (578 g) was dispersed in 50 minutes into 788 g of deionized water containing 28.5 parts hydrazine hydrate (35% hydrazine content), 24.2 parts DMEA and 30.1g of di-ethylene glycol mono-n-butyl ether (butyl carbitol) with the prepolymer temperature held at 50°C. The dispersion temperature was controlled between 21-28°C during the dispersion process. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 9: Comparative Polyurethane-Acrylic Dispersion:

This example demonstrates the effect of the solvent (di-ethylene glycol mono-n-butyl ether in Example 8) used in the water phase of the dispersion of Example 8. The same prepolymer composition (579 g) prepared by the same process as Example 8 was dispersed into 788 g of deionized water containing 28.6 parts hydrazine hydrate (35% hydrazine content) and 24.2 parts DMEA in 50 minutes. The prepolymer was held at 50°C and the water temperature controlled between 21-28°C. The dispersion was allowed to mix for 40-50 minutes then the temperature of the dispersion was adjusted to 33-36°C and 0.5 parts of a 1% solution Fe-EDTA complex (pH >7.2) and 7.0 parts of aqueous 3.5% tert-butyl hydrogen peroxide was added followed by a slow addition of 11.6 parts of 2.0% aqueous erythorbic acid neutralized with triethylamine. The resulting polyurethane-acrylic dispersion properties are shown in the table below (Table 1).

### Example 10: Comparative Aromatic Polyurethane-Acrylic Dispersion:

This composition is similar to that used in Example 1. A prepolymer was prepared by combining items 3-7 of the ingredients below at 20-30°C to a 4 neck flask equipped with a thermometer, overhead stirrer and gas inlet. The reaction was run under a stream of dry air introduced through the gas inlet on the reactor. Item 1 was then added to the reactor and the temperature of the reaction mixture was adjusted to 50-54°C and held at this temperature for 60 minutes and then the temperature adjusted to 40-45°C. Item 2 was then added to the reactor and the temperature of the reactor maintained to <50°C. The temperature was then held at 48-51 °C for 1 hour and 40 minutes when the theoretical NCO% was reached as indicated by titration of a small sample. When the prepolymer reached the theoretical NCO, it was dispersed shortly afterwards as described below.

**Recipe 10**

| Item # | Material | Parts |
|---|---|---|
| 1 | Piothane 67-1000 HNA (OH# = 119.1) | 158.0 |
| 2 | Dimethylolbutanoic acid | 28.7 |
| 3 | PPG725 | 37.7 |
| 4 | MMA | 124.5 |
| 5 | BHT | 0.2 |
| 6 | MDI | 87.3 |
| 7 | TDI | 60.8 |

The resulting isocyanate terminated prepolymer (about 442.3 g) was dispersed in about 50 minutes into 740g of deionized water containing 21.8 parts hydrazine hydrate (35% hydrazine content), 18.6 parts DMEA and 23.2g of di-ethylene glycol mono-n-butyl ether (butyl carbitol) with the prepolymer temperature held at 50°C. The dispersion temperature was controlled between 21-28°C during the dispersion process. The dispersion was allowed to mix for 40-50 minutes then the temperature of the dispersion was adjusted to 33 - 36 C and 0.4 parts of a 1% solution Fe-EDTA complex (pH >7.2) and 6.0 parts of aqueous 3.5% ten-butyl hydrogen peroxide was added followed by a slow addition of 10 parts of 2.0% aqueous erythorbic acid neutralized with triethylamine. The resulting polyurethane-acrylic dispersion properties are shown in the table below (Table 1).

**Table 1**

| **Example #** | **pH** | **Visc (cps)*** | **Solids (%)** | **Particle Size (nm)** | **Sediment (%)** | **Final NCO% vs Theory** | **Wt% other Solvents (vs Solids)** |
|---|---|---|---|---|---|---|---|
| 1 | 8.96 | 1140 | 37.6 | 85.7 | 0.1 | 97.8 | 5.0 DB |
| 2 | 9.02 | 850 | 35.3 | 160.0 | 0.2 | 99.3 | 5.0 DPnB |
| Comparative 3 | 8.99 | 3000 | 37.5 | 267.1 | 0.6 | 97.8 | 0.0 |
| 4 | 9.22 | 250 | 35.3 | 157.8 | 0.1 | 97.5 | 5.0 DB |
| Comparative 5 | 9.07 | 390 | 35.8 | 233.6 | 0.3 | 97.5 | 0.0 |
| 7 | 8.21 | 150 | 36.3 | 66.6 | 0.0 | 97.8 | 5.0 DB |
| 8 | 8.04 | 850 | 39.9 | 141.2 | 0.1 | 99.6 | 5.0 DB |
| Comparative 9 | 8.13 | 345 | 40.5 | 202.4 | 0.8 | 99.6 | 0.0 |
| Comparative 10 | 8.7 | 110 | 35.7 | 116.5 | 1.1 | 97.5 | 5.0 DB |

| | | | | | | | |
|---|---|---|---|---|---|---|---|
| *1 cps = 1 mPa·s | | | | | | | |

## Claims

1. A waterborne aromatic polyurethane-acrylic dispersion that contains less than 5 wt.% of N-methyl-pyrrolidone which is obtained by the reaction of:
(1) an isocyanate terminated prepolymer formed from a reaction of components comprising:
a) 20-60% of a least one aromatic polyisocyanate;
b) 10-90% of vinyl monomer added at any time to the prepolymer;
c) 20-60% of at least one isocyanate reactive polyol not bearing ionizable groups with a MW > 500g/mol on average;
d) 1-12% of a diol, polyol or polyols or combinations thereof bearing active hydrogen groups as and containing a ionizable or potentially ionizable water dispersing group solubilized in either b) or c) or a combination thereof and optionally also containing a solvent or plasticizer,
and which dispersion also contains a polyketone oligomer which is the reaction product of an epoxidized vegetable oil and levulinic and/or pyruvic acid.

2. A dispersion according to claim 1, wherein the polyurethane was dispersed into water containing 2-20% of a ethylene glycol monoalkyl ether or propylene glycol monoalkyl ether based on the weight of prepolymer being added.

3. A dispersion according to claim 2, wherein said ethylene glycol monoalkyl ether containing solvent is a diethylene glycol C1-C4-monoalkyl ether.

4. An aqueous dispersion composition according to claims 1 and 2 wherein said vinyl monomer is polymerized at any time into a vinyl polymer and the ratio of polyurethane to vinyl polymer in the polyurethane-acrylic dispersion is in the range of 90:10 to 10:90.

5. A dispersion according to claim 1 or 2, wherein said vinyl monomer is polymerized at any time into a vinyl polymer and wherein said dispersion contains a ketone functional moiety in the isocyanate terminated prepolymer, vinyl polymer or combination thereof.

6. A dispersion according to any of claims 1 or 5 which also contains a di- or poly- hydrazide functional molecule.

7. A dispersion according to any of claims 1, 5 or 6 which also contains at least one of a second crosslinkable functionality such as an auto-oxidatively crosslinkable group.

8. A dispersion according to claims 1, 2 or 3 wherein at least 75 mole percent of the total polyisocyanates used to form said polyurethane are said at least one aromatic polyisocyanate.

9. A dispersion according to claim 8, wherein said at least one aromatic polyisocyanate is at least 95 mole percent of the total polyisocyanates used to form said polyurethane.

10. A dispersion according to claim 8 or 9, wherein said at least one aromatic polyisocyanate comprises diphenylmethane diisocyanate and/or toluene diisocyanate.

11. A dispersion according to claim 1 or 2, comprising at least 1 wt% of the diol, polyol or polyols or combinations thereof containing ionizable water dispersing groups comprising dimethylol butanoic acid or dimethylol propanoic acid and optionally with other water dispersing groups.

12. An aqueous dispersion composition according to above claims where the polyol in claim 1(c) is a combination of a) propylene glycol polyol and b) another polyol selected from the groups consisting of polyester polyols, polycarbonate polyols and polybutadiene polyols where the ratio of a) propylene glycol polyol to the b) another polyol is in the range of 10:90 to 90:10 based on total polyols from a) and b).

## Patentansprüche

1. Wässrige Dispersion eines aromatischen Polyurethan-Acrylharzes, die weniger als 5 Gew.-% N-Methylpyrrolidon enthält, wobei das Harz erhalten wird durch die Reaktion von:
(1) einem Isocyanat-terminierten Prepolymer, das durch eine Reaktion von Komponenten gebildet wird, die Folgendes umfassen:
a) 20-60% wenigstens eines aromatischen Polyisocyanats;
b) 10-90% Vinylmonomer, das zu einem beliebigen Zeitpunkt zu dem Prepolymer gegeben wird;
c) 20-60% wenigstens eines Isocyanat-reaktiven Polyols, das keine dissoziierbaren Gruppen trägt, mit einem MW von durchschnittlich > 500 g/mol;
d) 1-12% eines Diols, Polyols oder Polyole oder Kombinationen davon, die aktive Wasserstoffgruppen tragen und eine dissoziierbare oder potentiell dissoziierbare Wasserdispersionsgruppe enthalten und entweder in b) oder in c) oder in beiden gelöst sind und gegebenenfalls auch ein Lösungsmittel oder einen Weichmacher enthalten;
wobei die Dispersion auch ein Polyketon-Oligomer enthält, das das Reaktionsprodukt von einem epoxidierten Pflanzenöl und Lävulinsäure und/oder Brenztraubensäure ist.

2. Dispersion gemäß Anspruch 1, wobei das Polyurethan in Wasser dispergiert wurde, das 2-20% eines Ethylenglycolmonoalkylethers oder Propylenglycolmonoalkylethers enthält, bezogen auf das Gewicht des hinzugefügten Prepolymers.

3. Dispersion gemäß Anspruch 2, wobei das Ethylenglycolmonoalkylether enthaltende Lösungsmittel ein Diethylenglycol-C₁-C₄-monoalkylether ist.

4. Wässrige Dispersionszusammensetzung gemäß Anspruch 1 und 2, wobei das Vinylmonomer zu einem beliebigen Zeitpunkt zu einem Vinylpolymer polymerisiert wird und das Verhältnis von Polyurethan zu Vinylpolymer in der Polyurethan-Acrylharz-Dispersion im Bereich von 90:10 bis 10:90 liegt.

5. Dispersion gemäß Anspruch 1 oder 2, wobei das Vinylmonomer zu einem beliebigen Zeitpunkt zu einem Vinylpolymer polymerisiert wird und wobei die Dispersion eine Keton-funktionelle Struktureinheit in dem Isocyanat-terminierten Prepolymer, dem Vinylpolymer oder einer Kombination davon enthält.

6. Dispersion gemäß einem der Ansprüche 1 oder 5, die auch ein Di- oder Polyhydrazid-funktionelles Molekül enthält.

7. Dispersion gemäß einem der Ansprüche 1, 5 oder 6, die auch wenigstens eine zweite vernetzbare Funktionalität, wie eine autooxidativ vernetzbare Gruppe, enthält.

8. Dispersion gemäß Anspruch 1, 2 oder 3, wobei es sich bei wenigstens 75 Molprozent der gesamten Polyisocyanate, die zur Bildung des Polyurethans verwendet werden, um das wenigstens eine aromatische Polyisocyanat handelt.

9. Dispersion gemäß Anspruch 8, wobei das wenigstens eine aromatische Polyisocyanat wenigstens 95 Molprozent der gesamten Polyisocyanate, die zur Bildung des Polyurethans verwendet werden, ausmacht.

10. Dispersion gemäß Anspruch 8 oder 9, wobei das wenigstens eine aromatische Polyisocyanat Diphenylmethandiisocyanat und/oder Toluoldiisocyanat umfasst.

11. Dispersion gemäß Anspruch 1 oder 2, die wenigstens 1 Gew.-% des Diols, des Polyols oder der Polyole oder der Kombinationen davon, die dissoziierbare Wasserdispersionsgruppen enthalten, umfasst und Dimethylolbutansäure oder Dimethylolpropansäure, gegebenenfalls mit anderen Wasserdispersionsgruppen, umfasst.

12. Wässrige Dispersionszusammensetzung gemäß den obigen Ansprüchen, wobei das Polyol in Anspruch 1(c) eine Kombination von a) Propylenglycolpolyol und b) einem anderen Polyol, das aus den Gruppen ausgewählt ist, die aus Polyesterpolyolen, Polycarbonatpolyolen und Polybutadienpolyolen bestehen, ist, wobei das Verhältnis von a) Propylenglycolpolyol zu dem b) anderen Polyol im Bereich von 10:90 bis 90:10 liegt, bezogen auf die Gesamtpolyole von a) und b).

## Revendications

1. Dispersion de polyuréthane-acrylique aromatique hydrodiluable qui contient moins de 5 % en poids de N-méthyl-pyrrolidone qui est obtenue par la réaction de :
(1) un prépolymère à terminaisons isocyanate formé à partir d'une réaction de composants comprenant :
a) 20 à 60 % d'au moins un polyisocyanate aromatique ;
b) 10 à 90 % d'un monomère vinyle ajouté à un moment quelconque au prépolymère ;
c) 20 à 60 % d'au moins un polyol réactif d'isocyanate ne portant pas de groupes ionisables avec une Mp > 500 g/mol en moyenne ;
d) 1 à 12 % d'un diol, d'un polyol ou de polyols ou de combinaisons de ceux-ci portant des groupes hydrogène actifs en tant que et contenant un groupe de dispersion dans l'eau ionisable ou potentiellement ionisable solubilisé dans b) ou c) ou une combinaison de ceux-ci et convenant aussi éventuellement un solvant ou un plastifiant,
et laquelle dispersion contient aussi un oligomère de polycétone qui est le produit de réaction d'une huile végétale époxydée et d'acide lévulinique et/ou pyruvique.

2. Dispersion selon la revendication 1, dans laquelle le polyuréthane a été dispersé dans de l'eau contenant 2 à 20 % d'un monoalkyléther d'éthylène glycol ou d'un monoalkyléther de propylène glycol, par rapport au poids du prépolymère ajouté.

3. Dispersion selon la revendication 2, dans laquelle ledit solvant contenant du monoalkyléther d'éthylène glycol est un (monoalkyl en C₁-C₄)-éther de diéthylène glycol.

4. Composition de dispersion aqueuse selon les revendications 1 et 2, dans laquelle ledit monomère vinyle est polymérisé à un moment quelconque dans un polymère de vinyle et le rapport du polyuréthane au polymère de vinyle dans la dispersion de polyuréthane-acrylique est dans la plage de 90:10 à 10:90.

5. Dispersion selon la revendication 1 ou 2, dans laquelle ledit monomère vinyle est polymérisé à un moment quelconque dans un polymère de vinyle et dans laquelle ladite dispersion contient un groupement fonctionnel cétone dans le prépolymère à terminaisons isocyanate, le polymère de vinyle ou une combinaison de ceux-ci.

6. Dispersion selon l'une quelconque des revendications 1 ou 5, qui contient aussi une molécule fonctionnelle di- ou poly-hydrazoture.

7. Dispersion selon l'une quelconque des revendications 1, 5 ou 6, qui contient aussi au moins une seconde fonctionnalité réticulable telle qu'un groupe réticulable par auto-oxydation.

8. Dispersion selon les revendications 1, 2 ou 3, dans laquelle au moins 75 pour cent en moles de tous les polyisocyanates utilisés pour former ledit polyuréthane sont ledit au moins un polyisocyanate aromatique.

9. Dispersion selon la revendication 8, dans laquelle ledit au moins un polyisocyanate aromatique constitue au moins 95 pour cent en moles de tous les polyisocyanates utilisés pour former ledit polyuréthane.

10. Dispersion selon la revendication 8 ou 9, dans laquelle ledit au moins un polyisocyanate aromatique comprend du diphénylméthane diisocyanate et/ou du toluène diisocyanate.

11. Dispersion selon la revendication 1 ou 2, comprenant au moins 1 % en poids du diol, du polyol ou des polyols ou de combinaisons de ceux-ci contenant des groupes de dispersion dans l'eau ionisables comprenant de l'acide diméthylol-butanoïque ou de l'acide diméthylol-propanoïque et éventuellement avec d'autres groupes de dispersion dans l'eau.

12. Composition de dispersion aqueuse selon les revendications précédentes, dans laquelle le polyol dans la revendication 1 (c) est une combinaison a) d'un propylène glycol polyol et b) d'un autre polyol choisi dans les groupes constitués des polyester polyols, des polycarbonate polyols et des polybutadiène polyols, dans laquelle le rapport de a) le propylène glycol polyol à b) l'autre polyol est dans la plage de 10:90 à 90:10, par rapport aux polyols totaux de a) et de b).
